# EUROPEAN PATENT APPLICATION

(11) **EP 4 510 408 A1**
(43) Date of publication of application: **19.02.2025**
(21) Application number: 22942060.9
(22) Date of filing: 19.05.2022
(51) Int. Cl.: H02J 3/28

(54) **ELECTRICAL POWER CONTROL METHOD AND CHARGING AND DISCHARGING SYSTEM**

(71) Applicant: Contemporary Amperex Technology Co., Limited, Ningde, Fujian 352100 (CN)
(72) Inventor: ZHENG, Zhimin, Ningde, Fujian 352100 (CN); ZHOU, Linggang, Ningde, Fujian 352100 (CN); WANG, Xu, Ningde, Fujian 352100 (CN)
(74) Representative: Rowlands, Stuart Michael
(86) International application number: PCT/CN2022/093746
(87) International publication number: WO 2023/221018

(57) **Abstract**

Embodiments of the present application provide an electrical power control method and a charging and discharging system, the method comprising: acquiring first data, the first data being used to indicate power utilization information of a power grid; and when an electric device is connected to a charging and discharging device, controlling the electric device according to the first data to obtain electric energy from the power grid or transmit electric energy to the power grid by means of the charging and discharging device. The technical solution provided in the present application facilitates the appropriate allocation of electrical power.

## Description

### FIELD OF TECHNOLOGY

The present application relates to the field of electric power systems, and particularly relates to a method for controlling electric power and a charging and discharging system.

### BACKGROUND

With the development of the times, electric vehicles have a huge market potential and are capable of effectively improving energy conservation and emission reduction thanks to their advantages of good environmental friendliness, low noise, low use cost and etc., thereby facilitating societal development and progress. Meanwhile, electric vehicles have become increasingly valued owing to their energy storage properties and flexibility.

Usually, only when connected to a power grid, can electric vehicles transmit electric power, and the power consumption of the power grid changes constantly. Therefore, how to control the electrical power to implement the appropriate allocation of electric power is a problem needed to be solved urgently.

### SUMMARY

The present application provides a method for controlling electric power and a charging and discharging system, which is beneficial to achieving a reasonable allocation of electric power.

In a first aspect, provided is a method for controlling electric power, including: acquiring first data, the first data being configured to indicate electricity consumption information of a power grid; and controlling the electricity consumption device to acquire electric energy from the power grid or to transmit the electric energy to the power grid through the charging and discharging device according to the first data in a case where an electricity consumption device is connected to a charging and discharging device.

In the embodiment of the present application, a method for controlling electric power is provided. The first data configured to indicate electricity consumption information of the power grid is acquired, and the electricity consumption device is controlled to acquire electric energy from the power grid or to transmit the electric energy to the power grid through the charging and discharging device according to the first data in a case where an electricity consumption device is connected to the charging and discharging device. In the method for controlling electric power, in a case where the electricity consumption device is connected to the charging and discharging device, the electricity consumption device can be automatically controlled to acquire electric energy from the power grid or to transmit the electric energy to the power grid through the charging and discharging device according to the first data. Meanwhile, since the first data is configured to indicate electricity consumption information of the power grid, the electric energy between the electricity consumption device and the power grid can be flexibly transmitted according to electricity consumption information, thereby facilitating reasonable allocation of electric power.

In a possible implementation mode, when the electricity consumption device is connected to the charging and discharging device, the method further includes: acquiring an initial amount of electric charge of the electricity consumption device. Thus, once the electricity consumption device is connected to the charging and discharging device, the initial amount of electric charge of the electricity consumption device can be acquired, thereby facilitating subsequent operations according to the initial amount of electric charge of the electricity consumption device.

In a possible implementation mode, the step of controlling the electricity consumption device to transmit the electric energy to the power grid includes: controlling the electricity consumption device to transmit the electric energy to the power grid in a case where the amount of electric charge of the electricity consumption device is greater than a first threshold. Only when the amount of electric charge of the electricity consumption device is greater than the first threshold, can the electricity consumption device be controlled to transmit the electric energy to the power grid, which can guarantee basic requirements of the electricity consumption device on amount of electric charge.

In a possible implementation mode, the method further includes: controlling the electricity consumption device to stop transmitting the electric energy to the power grid in a case where the amount of electric charge of the electricity consumption device is less than or equal to a second threshold, wherein the second threshold is less than the first threshold. Thus, after the electricity consumption device transmits the electric energy to the power grid, the amount of electric charge of the electricity consumption device can be kept in a reasonable range, which not only can satisfy the basic amount of electric charge required by operation of parts in the electricity consumption device, but also can prevent too low amount of electric charge of the electricity consumption device after the electricity consumption device is disconnected from the charging and discharging device in the process that the electricity consumption device transmits the electric energy to the power grid.

In a possible implementation mode, the first threshold is 50% of a fully charged amount of electric charge of the electricity consumption device. Thus, it can be guaranteed that after the electricity consumption device is disconnected from the charging and discharging device, the amount of electric charge of the electricity consumption device satisfies a normal usage requirement.

In a possible implementation mode, the first data includes historical electricity consumption information of the power grid. The historical electricity consumption information can reflect historical electricity consumption condition, so that the electricity consumption device can be controlled to acquire the electric energy from the power grid or to transmit the electric energy to the power grid through the charging and discharging device according to the historical electricity consumption information, thereby facilitating reasonable allocation of electric power.

In a possible implementation mode, the first data includes predicted electricity consumption information of the power grid. The predicted electricity consumption information can reflect electricity consumption condition at the moment or at the next moment, so that transmission of the electric energy can be adjusted in real time according to the predicted electricity consumption information, thereby facilitating reasonable allocation of electric power.

In a possible implementation mode, before acquiring the first data, the method further includes: sending a prediction request to a server; and the acquiring the first data includes: receiving the predicted electricity consumption information sent by the server. By sending the prediction request to the server, the server can calculate the predicted electricity consumption information according to the prediction request, and the server sends the predicted electricity consumption information so as to control electric power according to the predicted electricity consumption information.

In a possible implementation mode, before the step of controlling the electricity consumption device to acquire electric energy from the power grid or to transmit the electric energy to the power grid through the charging and discharging device according to the first data, the method further includes: determining an electricity consumption peak period of the power grid or an electricity consumption trough period of the power grid according to the first data. Thus, compared with complicated electricity consumption information, the electricity consumption peak period and the electricity consumption trough period are simple and intuitive, so that electric energy transmission between the electricity consumption device and the power grid is controlled according to different electricity consumption periods.

In a possible implementation mode, the electricity consumption information includes the electricity consumption peak period of the power grid and/or the electricity consumption trough period of the power grid, and the step of controlling the electricity consumption device to acquire electric energy from the power grid or to transmit the electric energy to the power grid through the charging and discharging device according to the first data includes: in the electricity consumption peak period, controlling the electricity consumption device to transmit the electric energy to the power grid, and/or in the electricity consumption trough period, controlling the electricity consumption device to acquire the electric energy from the power grid. Thus, peak load shaving of electricity consumption loads of the power grid is achieved, which is beneficial to improving the operating efficiency and reliability of the power grid.

In a second aspect, provided is a charging and discharging system, including a control unit and a charging and discharging device, wherein the control unit is configured to acquire first data, the first data being configured to indicate electricity consumption information of a power grid; and to control the electricity consumption device to acquire electric energy from the power grid or to transmit the electric energy to the power grid through the charging and discharging device according to the first data in a case where the electricity consumption device is connected to the charging and discharging device.

In a third aspect, provided is a readable storage medium, configured to store a computer program, wherein the computer program is configured to execute the method for controlling electric power in the first aspect and any one possible implementation mode in the first aspect.

In a fourth aspect, provided is a control unit, including a processor and a memory, wherein the memory is configured to store the computer program, and the processor is configured to call the computer program to execute the method for controlling electric power in the first aspect and any one possible implementation mode in the first aspect.

In the embodiment of the present application, a method for controlling electric power is provided. The first data configured to indicate electricity consumption information of the power grid is acquired, and the electricity consumption device is controlled to acquire electric energy from the power grid or to transmit the electric energy to the power grid through the charging and discharging device according to the first data in a case where an electricity consumption device is connected to the charging and discharging device. In the method for controlling electric power, in a case where the electricity consumption device is connected to the charging and discharging device, the electricity consumption device can be automatically controlled to acquire electric energy from the power grid or to transmit the electric energy to the power grid through the charging and discharging device according to the first data. Meanwhile, since the first data is configured to indicate electricity consumption information of the power grid, the electric energy between the electricity consumption device and the power grid can be flexibly transmitted according to electricity consumption information, thereby facilitating reasonable allocation of electric power.

### BRIEF DESCRIPTION OF THE DRAWINGS

To describe the technical solutions in the embodiments of the present application more clearly, the following briefly describes the accompanying drawings required for describing the embodiments of the present application. Apparently, the accompanying drawings in the following description show merely some embodiments of the present application, and a person of ordinary skill in the art may still derive other drawings from these accompanying drawings without creative efforts.
FIG. 1 is a schematic diagram of a charging and discharging system in an embodiment of the present application.
FIG. 2 is a flow diagram of a method for controlling electric power in an embodiment of the present application.
FIG. 3 is a flow diagram of controlling an electricity consumption device to transmit electric energy to a power grid in an embodiment of the present application.
FIG. 4 is a flow diagram of a method for controlling electric power in an embodiment of the present application.
FIG. 5 is a flow diagram of controlling the electricity consumption device to acquire the electric energy from the power grid in an embodiment of the present application.
FIG. 6 is a schematic diagram of a charging and discharging system in an embodiment of the present application.
FIG. 7 is a schematic diagram of information interaction between a control unit and a server in an embodiment of the present application.
FIG. 8 is a schematic diagram of the control unit in an embodiment of the present application.

The drawings are not drawn to scale.

### DESCRIPTION OF THE EMBODIMENTS

The following further describes the implementations of the present application in detail with reference to the accompanying drawings and embodiments. Detailed description of the following embodiments and accompanying drawings are used to illustratively state the principles of the present application, but not to limit the scope of the present application, that is, the present application is not limited to the embodiments described.

In description of the present application, it should be understood that unless otherwise specified, the implication of "a plurality of" means more than two; orientation or position relationships indicated by terms "upper", "lower", "left', "right", "inner", "outer" and the like are only to describe the present application and simplify the description rather than indicating or implying that the indicated devices or components must have specific orientations and are configured and operated in the specific orientations. Therefore, it cannot be construed as limitations to the present application. In addition, the terms "first", "second", "third" and the like are for descriptive purposes only and should not be construed as indicating or implying relative importance. "Perpendicular" is by no means perpendicular in the strict sense but within an allowed range of error. "Parallel" is by no means parallel in the strict sense but within an allowed range of error.

Location words in the description below all are directions shown in drawings and do not limit the specific structure of the present application. In the description of the present application, it is to be further noted that unless otherwise specified and defined, the terms "mounting", "connecting" and "connection" should be understood in a broad sense, for example, "mounting", "connecting" and "connection" can be either fixed connection or detachable connection or integrated connection; can be either direct connection and can be either indirect connection via an intermediation. Those of ordinary skill in the art can understand specific meaning of the terms in the present application under specific circumstances.

With the development of the society, the load in a power system increases gradually, and the peak and trough difference value of a load curve gradually increases, which is harmful to stable operation of the power grid. Therefore, the energy storage technique is imported into the power system and can achieve storage and release of electric energy. An electric automobile can further serve as a mobile energy storage device while being used as the electricity consumption device. Usually, the proportion of the travel time of the electric automobile in total time is small. How to fully utilize a battery resource of the electric automobile to achieve reasonable allocation of electric power is a technical problem needed to be solved urgently.

In view of this, the embodiment of the present application provides a method for controlling electric power, including: acquiring first data configured to indicate electricity consumption information of a power grid; and controlling the electricity consumption device to acquire electric energy from the power grid or to transmit the electric energy to the power grid through the charging and discharging device according to the first data in a case where an electricity consumption device is connected to a charging and discharging device. In the method for controlling electric power, in a case where the electricity consumption device is connected to the charging and discharging device, the electricity consumption device can be automatically controlled to acquire electric energy from the power grid or to transmit the electric energy to the power grid through the charging and discharging device according to the first data. Meanwhile, since the first data is configured to indicate electricity consumption information of the power grid, the electric energy between the electricity consumption device and the power grid can be flexibly transmitted according to electricity consumption information, thereby facilitating reasonable allocation of electric power.

The electricity consumption device in the present application can be the electric automobile and can further be other devices having an energy storage effect, which is not limited in the embodiment of the present application.

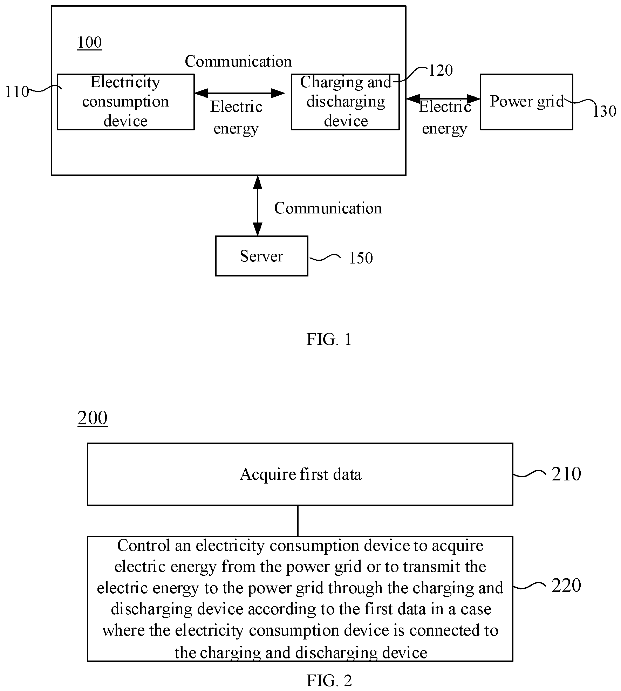

FIG. 1 is a schematic diagram of a charging and discharging system 100 in an embodiment of the present application. As shown in FIG. 1, the charging and discharging system 100 includes an electricity consumption device 110 and a charging and discharging device 120. The electricity consumption device 110 is connected to a power grid 130 through the charging and discharging device 120 to transmit electric energy between the electricity consumption device 110 and the power grid 130. That is to say, in a case where the electricity consumption device 110 is connected to the power grid 130 through the charging and discharging device 120, the electricity consumption device 110 can be charged, i.e., acquires electric energy from the power grid 130 through the charging and discharging device 120; the electricity consumption device 110 can discharge, i.e., transmits the electric energy to the power grid 130 through the charging and discharging device 120; the electricity consumption device 110 can also be in a still state, i.e., neither be charged nor discharge.

The electricity consumption device 110 can include a battery system where at least one battery pack can be arranged, and the at least one battery pack can be collectively called a battery as a whole. In terms of type of the battery, the battery can be a battery in any type, including, but not limited to, a lithium ion battery, a lithium metal battery, a lithium-sulfur battery, a lead acid battery, a nickel-cadmium battery, a nickel-metal hydride battery or a lithium-air battery and so forth. In terms of scale of the battery, the battery in the embodiment of the present application can be either a battery cell or a battery module or a battery pack. The battery module or the battery pack can be formed by connecting a plurality of batteries in series. In the embodiment of the present application, the specific type and scale of the battery are not specified specifically.

Optionally, the electricity consumption device 110 can include a first control unit, a power conversion system (PCS) and a battery management system (BMS). The first control unit can be configured to perform data acquisition, network monitoring, energy scheduling and so forth. The PCS can be configured to control the electricity consumption device 110 to be charged or discharge. The BMS can be configured to monitor the state of the battery.

Optionally, the BMS and the battery can be integrally arranged in a same device/apparatus, or can be arranged out of the battery as an independent device/apparatus.

Optionally, the first control unit is an energy management system (EMS).

The charging and discharging device 120 can be a device for supplementing electric energy to the battery in the battery system and/or controlling the battery to discharge. For example, the charging and discharging device 120 can be a bidirectional charging pile or a charging pile supporting a vehicle to grid 130 (V2G) pattern.

Optionally, the charging and discharging device 120 can be fixedly mounted in a residential quarter, an industrial part, a shopping mall and so forth.

Optionally, the charging and discharging device 120 can include a second control unit configured to perform data acquisition, network monitoring, energy scheduling and so forth.

Optionally, the electricity consumption device 110 and the charging and discharging device 120 can be further communicated, and alternatively, information interaction can be performed between the electricity consumption device 110 and the charging and discharging device 120.

Optionally, the charging and discharging system 100 can be communicated with a server 150, i.e., information interaction. The server 150 can include a cloud service system which can be configured to acquire, send and calculate data. Optionally, the charging and discharging system 100 can perform information interaction with the server 150 through the Internet, which is not limited specifically in the embodiment of the present application as long as information interaction therebetween can be achieved.

Optionally, the charging and discharging system 100 can include a control unit 160 and the charging and discharging device 120. The control unit 160 is configured to control electric energy transmission between the electricity consumption device 110 and the power grid 130 and can be the first control unit, the second control unit or other controllers capable of controlling the electricity consumption device 110 and/or the charging and discharging device 120.

Optionally, the second control unit and/or other controllers capable of controlling the electricity consumption device 110 and/or the charging and discharging device 120 can be fixedly mounted in a residential quarter, an industrial part, a shopping mall and so forth.

FIG. 2 is a flow diagram of a method 200 for controlling electric power in an embodiment of the present application. Optionally, as an example, the method 200 in the embodiment of the present application can be suitable for the aforementioned charging and discharging system 100.

As shown in FIG. 2, the method 200 for controlling electric power includes the following step:
S210: first data is acquired, the first data being configured to indicate electricity consumption information of a power grid 130.

Optionally, the first data can be acquired from either an electricity transaction center or a transaction center of a comprehensive energy service company or the cloud service system.

Optionally, the first data can be acquired before the electricity consumption device 110 is connected to the charging and discharging device 120, and the first data is stored in a memory for use in a subsequent process.

Optionally, the first data can be acquired in a case where the electricity consumption device 110 is connected to the charging and discharging device 120, which is not limited specifically in the embodiment of the present application. For example, the first data is acquired in when the electricity consumption device 110 is connected to the charging and discharging device 120. That is to say, the electricity consumption device 110 is connected to the charging and discharging device 120, which is a triggering condition of acquiring the first data.

S220: in a case where the electricity consumption device 110 is connected to the charging and discharging device 120, the electricity consumption device 110 is controlled to acquire electric energy from the power grid 130 or to transmit the electric energy to the power grid 130 through the charging and discharging device 120 according to the first data.

The first data includes electricity consumption information of the power grid 130. In a case where the electricity consumption device 110 is connected to the charging and discharging device 120, the electricity consumption device 110 can be controlled to acquire electric energy from the power grid 130 or to transmit the electric energy to the power grid 130 through the charging and discharging device 120 according to the first data.

The method 200 can be executed by the control unit 160, and the control unit 160 can be either the first control unit 160 or the second control unit 160 or a controller except for the first control unit 160 or the second control unit 160.

Optionally, the method 200 is executed by the first control unit 160.

In the embodiment of the present application, a method for controlling electric power is provided. The first data configured to indicate electricity consumption information of the power grid 130 is acquired, and the electricity consumption device 110 is controlled to acquire electric energy from the power grid 130 or to transmit the electric energy to the power grid 130 through the charging and discharging device 120 according to the first data in a case where the electricity consumption device 110 is connected to the charging and discharging device 120.In the method for controlling electric power, in a case where the electricity consumption device 110 is connected to the charging and discharging device 120, the electricity consumption device 110 can be automatically controlled to acquire electric energy from the power grid 130 or to transmit the electric energy to the power grid 130 through the charging and discharging device 120 according to the first data. Meanwhile, since the first data is configured to indicate electricity consumption information of the power grid 130, the electric energy between the electricity consumption device 110 and the power grid 130 can be flexibly transmitted according to electricity consumption information, thereby facilitating reasonable allocation of electric power.

Optionally, in an embodiment of the present application, when the electricity consumption device 110 is connected to the charging and discharging device 120, the method 200 further includes: acquiring an initial amount of electric charge of the electricity consumption device 110.

Optionally, once the electricity consumption device is 110 connected to the charging and discharging device 120, the initial amount of electric charge of the electricity consumption device 110 is automatically acquired, thereby facilitating subsequent operations according to the initial amount of electric charge. For example, whether the electricity consumption device 110 is controlled to transmit electric energy to the power grid 130 is determined according to the initial amount of electric charge. Thus, connection of the electricity consumption device 110 and the charging and discharging device 120 can serve as the triggering condition of controlling the control unit 160 to transmit electric energy between the electricity consumption device 110 and the power grid 130, so that manual operation of a user is avoided, which is beneficial to improving automation of the method for controlling electric power.

Optionally, the step of controlling the electricity consumption device 110 to transmit the electric energy to the power grid 130 includes: in a case where the amount of electric charge of the electricity consumption device 110 is greater than a first threshold, controlling the electricity consumption device 110 to transmit the electric energy to the power grid 130.

Optionally, the amount of electric charge of the electricity consumption device 110 can be the initial amount of electric charge of the electricity consumption device 110. When the initial amount of electric charge is greater than the first threshold, the electricity consumption device 110 is controlled to transmit electric energy to the power grid 130. When the initial amount of electric charge is less than or equal to the first threshold, the electricity consumption device 110 is controlled not to transmit electric energy to the power grid 130. Thus, the initial amount of electric charge of the electricity consumption device 110 is greater than the first threshold, which can serve as the triggering condition of transmitting electric energy to the power grid 130 by the electricity consumption device 110. The condition that the electric energy is transmitted to the power grid 130 in a case where the initial amount of electric charge is insufficient, which can guarantee basic requirements of the electricity consumption device 110 on amount of electric charge. For example, as for as the electric automobile is concerned, when the electric automobile is disconnected from the charging and discharging device 120 due to sudden failures or during emergency accidents, it can be guaranteed that the amount of electric charge of the electric automobile is enough to make the electric automobile drive to the next destination.

Optionally, when the initial amount of electric charge of the electricity consumption device 110 is less than or equal to the first threshold, the electricity consumption device 110 is controlled not to transmit electric energy to the power grid 130, which means that the electricity consumption device 110 is controlled neither to transmit electric energy to the power grid 130 nor to acquire electric energy from the power grid 130.

Optionally, the amount of electric charge of the electricity consumption device 110 can be the current amount of electric charge of the electricity consumption device 110. When the current amount of electric charge is greater than the first threshold, the electricity consumption device 110 is controlled to transmit electric energy to the power grid 130.

Optionally, the first threshold corresponding to the current amount of electric charge and the first threshold corresponding to the initial amount of electric charge can be either same or different, which can be set according to specific condition and is not limited in the embodiment of the present application.

Optionally, in an embodiment of the present application, the method 200 further includes: in a case where the amount of electric charge of the electricity consumption device 110 is less than or equal to a second threshold, controlling the electricity consumption device 110 to stop transmitting the electric energy to the power grid 130, wherein the second threshold is less than the first threshold.

Optionally, the amount of electric charge of the electricity consumption device 110 is the current amount of electric charge of the electricity consumption device 110.

Optionally, in a case where the current amount of electric charge of the electricity consumption device 110 is greater than the second threshold, the electricity consumption device 110 is controlled to transmit electric energy to the power grid 130; and in a case where the amount of electric charge of the electricity consumption device 110 is less than or equal to the second threshold, the electricity consumption device 110 is controlled to stop transmitting the electric energy to the power grid 130. Thus, after the electricity consumption device 110 transmits electric energy to the power grid 130, the amount of electric charge of the electricity consumption device 110 can be kept in a reasonable range, which not only can satisfy the basic amount of electric charge required by operation of parts in the electricity consumption device 110, but also can prevent too low amount of electric charge of the electricity consumption device 110 after the electricity consumption device 110 is disconnected from the charging and discharging device 120 in the process that the electricity consumption device 110 transmits the electric energy to the power grid 130.

Optionally, in an embodiment of the present application, the first threshold is 50% of a fully charged amount of electric charge of the electricity consumption device 110. Thus, it can be guaranteed that after the electricity consumption device 110 is disconnected from the charging and discharging device 120, the amount of electric charge of the electricity consumption device 110 satisfies a normal usage requirement.

Optionally, the second threshold is 50% of a fully charged amount of electric charge of the electricity consumption device 110.

Optionally, the first threshold is 60% of a fully charged amount of electric charge of the electricity consumption device 110, and the second threshold is 50% thereof; or the first threshold is 50% of a fully charged amount of electric charge of the electricity consumption device 110, and the second threshold is 40% thereof.

Optionally, the first threshold and the second threshold can correspond to the depth of discharge (DOD) interval of the electricity consumption device 110 or the state of charge (SOC) of the electricity consumption device 110. The amplitudes of the first and second thresholds can be set by the user in advance according to his/her habit for the convenience of executing the method for controlling electric power, which is not limited specifically in the embodiment of the present application. When the electricity consumption device 110 is the electric automobile, the first and second thresholds can be set according to a stopping time of the electric automobile.

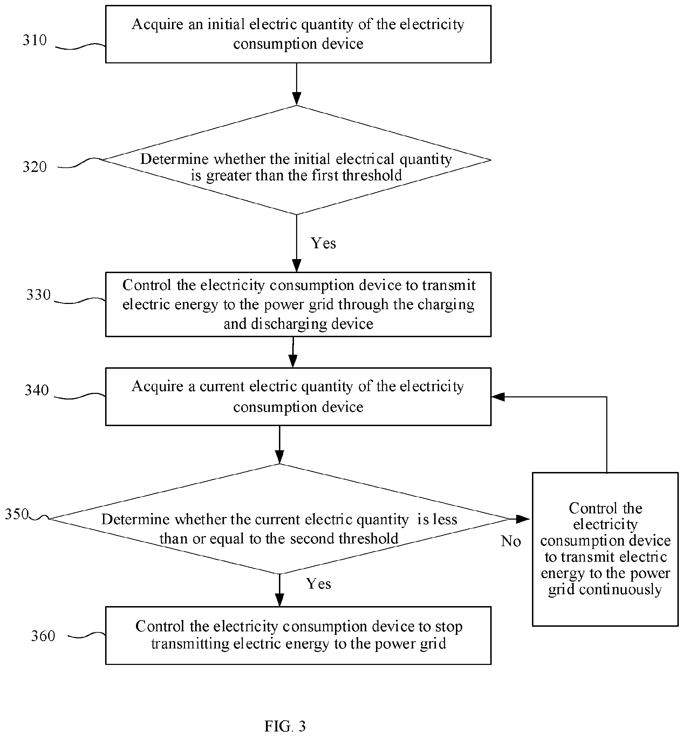

FIG. 3 is a flow diagram of controlling an electricity consumption device 110 to transmit electric energy to a power grid 130 in an embodiment of the present application. As shown in FIG. 3, the process includes the following steps:

S310, an initial amount of electric charge of the electricity consumption device 110 is acquired.

Optionally, the BMS can be configured to detect the initial amount of electric charge of the electricity consumption device 110 and send the initial amount of electric charge to the control unit 160, so that the control unit 160 can acquire the initial amount of electric charge of the electricity consumption device 110.

S320: whether the initial amount of electric charge is greater than the first threshold is determined. If the initial amount of electric charge of the electricity consumption device 110 is greater than the first threshold, S330 is executed.

S330: the electricity consumption device 110 is controlled to transmit electric energy to the power grid 130 through the charging and discharging device 120.

Optionally, in a case where the initial amount of electric charge is greater than the first threshold, the control unit 160 can send a discharge command to the PCS of the electricity consumption device 110, the PCS sends the discharge command to the BMS, and the BMS executes the discharging operation; in this case, the control unit 160 can further send the discharge command to the charging and discharging device 120, so that the electricity consumption device 110 transmits electric energy to the power grid 130 through the charging and discharging device 120.

S340: the current amount of electric charge of the electricity consumption device 110 is acquired.

Optionally, the BMS can be configured to detect the current amount of electric charge of the electricity consumption device 110 and send the current amount of electric charge to the control unit 160, so that the control unit 160 can acquire the current amount of electric charge of the electricity consumption device 110.

S350: whether the current amount of electric charge of the electricity consumption device 110 is less than or equal to the second threshold is determined. If the current amount of electric charge of the electricity consumption device 110 is less than the first threshold, S360 is executed. If the current amount of electric charge of the electricity consumption device 110 is greater than the second threshold, the electricity consumption device 110 is controlled to transmit electric energy to the power grid 130 continuously, and it returns to the S340.

Optionally, in a case where the current amount of electric charge of the electricity consumption device 110 is less than or equal to the second threshold, the control unit 160 can send a discharge stopping command to the PCS, the PCS sends the discharge stopping command to the BMS, and the BMS executes the operation of stopping discharge; in this case, the control unit 160 further can send the discharge stopping command to the charging and discharging device 120, so that the electricity consumption device 110 stops transmitting electric energy to the power grid 130 through the charging and discharging device 120.

Optionally, in a case where the current amount of electric charge of the electricity consumption device 110 is greater than the second threshold, the control unit 160 can send the discharge stopping command to the PCS continuously, the PCS sends the discharge stopping command to the BMS, and the BMS executes the operation of stopping discharge; in this case, the control unit 160 further can send the discharge stopping command to the charging and discharging device 120 continuously, so that the electricity consumption device 110 transmits electric energy to the power grid 130 through the charging and discharging device 120 continuously.

S360: the electricity consumption device 110 is controlled to stop transmitting electric energy to the power grid 130.

Optionally, in an embodiment of the present application, the first data is historical electricity consumption information of the power grid 130.

Optionally, the historical electricity consumption information can be electricity consumption information of the previous day or electricity consumption information of a given day. The electricity consumption information of the given day can be electricity consumption information of a certain special date, for example, the given day and the current day both are Friday or the given day and the current day both are 1st, April. The historical electricity consumption information can be directly acquired from either an electricity transaction center or a transaction center of a comprehensive energy service company or can be indirectly acquired from either the electricity transaction center or the transaction center of the comprehensive energy service company through the cloud service system.

The historical electricity consumption information can reflect historical electricity consumption condition, so that the historical electricity consumption condition is similar to the electricity consumption condition that day, so the electricity consumption device 110 can be controlled to acquire the electric energy from the power grid 130 or to transmit the electric energy to the power grid 130 through the charging and discharging device 120 according to the historical electricity consumption information, thereby facilitating reasonable allocation of electric power.

Optionally, in an embodiment of the present application, the first data includes predicted electricity consumption information of the power grid 130.

Optionally, the predicted electricity consumption information is calculated according to the historical electricity consumption information. The predicted electricity consumption information can reflect electricity consumption condition at the moment or at the next moment, so that transmission of the electric energy can be adjusted in real time according to the predicted electricity consumption information, thereby facilitating reasonable allocation of electric power.

Optionally, in an embodiment of the present application, before acquiring the first data, the method 200 for controlling electric power further includes: a prediction request is sent to a server 150; and the step of acquiring the first data includes: the predicted electricity consumption information sent by the server 150 is received. By sending the prediction request to the server 150, the server 150 can calculate the predicted electricity consumption information according to the prediction request, and the server 150 sends the predicted electricity consumption information so as to control electric power according to the predicted electricity consumption information.

Optionally, in an embodiment of the present application, before the step of controlling the electricity consumption device 110 to acquire electric energy from the power grid 130 or to transmit the electric energy to the power grid 130 through the charging and discharging device 120 according to the first data, the method 200 further includes: an electricity consumption peak period of the power grid 130 or an electricity consumption trough period of the power grid 130 is determined according to the first data.

Optionally, the first data can be either the electricity consumption peak period and the electricity consumption trough period or an electricity consumption curve. In a case where the first data is the electricity consumption curve, corresponding electricity consumption peak period and electricity consumption trough period in the electricity consumption curve can be analyzed and calculated according to the electricity consumption curve. Thus, compared with complicated electricity consumption information such as the electricity consumption curve, the electricity consumption peak period and the electricity consumption trough period are simple and intuitive, so that electric energy transmission between the electricity consumption device 110 and the power grid 130 is controlled according to different electricity consumption periods.

Optionally, in an embodiment of the present application, the electricity consumption information includes the electricity consumption peak period of the power grid 130 and/or the electricity consumption trough period of the power grid 130, and the step of controlling the electricity consumption device 110 to acquire electric energy from the power grid 130 or to transmit the electric energy to the power grid 130 through the charging and discharging device 120 according to the first data includes: in the electricity consumption peak period, the electricity consumption device 110 is controlled to transmit the electric energy to the power grid 130, and/or in the electricity consumption trough period, the electricity consumption device 110 is controlled to acquire the electric energy from the power grid 130. Thus, peak load shaving of electricity consumption loads of the power grid 130 is achieved, which is beneficial to improving the operating efficiency and reliability of the power grid 130.

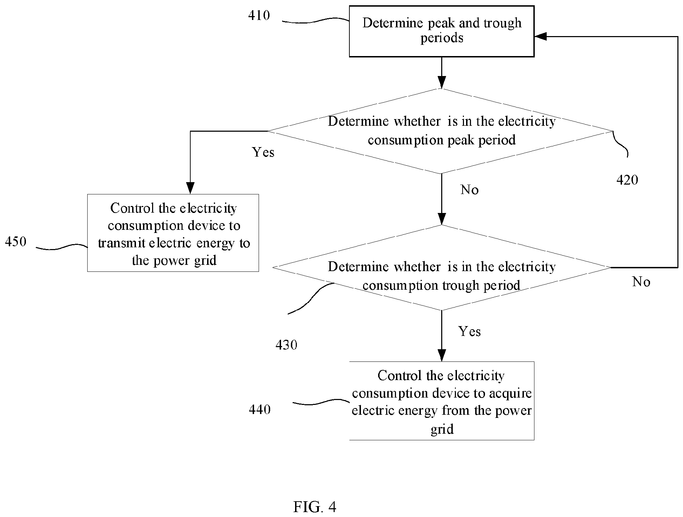

FIG. 4 is a flow diagram of a method for controlling electric power in an embodiment of the present application. As shown in FIG. 4, the method specifically includes the following steps.

S410, peak and trough periods are determined.

In S410, after the first data is acquired, the electricity consumption peak period and/or the electricity consumption trough period of the power grid 130 are determined according to the first data.

Optionally, the first data can be the electricity consumption peak period and/or the electricity consumption trough period or an electricity consumption curve. In a case where the first data is the electricity consumption curve, the control unit 160 can calculate corresponding electricity consumption peak period and electricity consumption trough period according to the electricity consumption curve.

S420, whether the power grid is in the electricity consumption peak period is determined.

In S420, whether the power grid at the current moment is in the electricity consumption peak period can be determined according to the electricity consumption peak period and the electricity consumption trough period determined in S410. If the power grid at the current moment is in the electricity consumption peak period, S450 is executed. If the power grid at the current moment is not in the electricity consumption peak period, S430 is executed.

S430, whether the power grid is in the electricity consumption trough period is determined.

If the power grid at the current moment is in the electricity consumption trough period, S440 is executed. If the power grid at the current moment is not in the electricity consumption trough period, S410 is executed.

S440: the electricity consumption device 110 is controlled to acquire electric energy from the power grid 130.

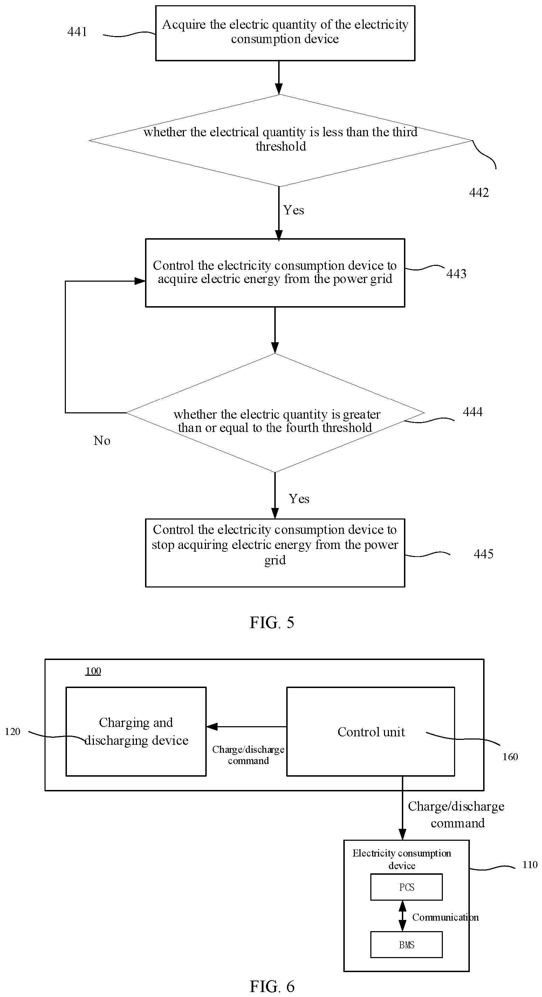

FIG. 5 is a flow diagram of controlling an electricity consumption device 110 to acquire electric energy from a power grid 130 in an embodiment of the present application. Optionally, as shown in FIG. 5, the step of controlling the electricity consumption device 110 to acquire electric energy from the power grid 130 can include the following steps.

S441: the amount of electric charge of the electricity consumption device 110 is acquired.

Optionally, the amount of electric charge of the electricity consumption device 110 can be either the initial amount of electric charge or the current amount of electric charge.

S442: whether the amount of electric charge of the electricity consumption device 110 is less than a third threshold is determined. If the amount of electric charge of the electricity consumption device 110 is less than the first threshold, S443 is executed.

Optionally, the third threshold can be 100% of a fully charged amount of electric charge of the electricity consumption device 110. Its specific numerical value can be set according to an actual demand, which is not limited specifically in the embodiment of the present application. Optionally, the third threshold can correspond to the SOC.

S443: the electricity consumption device 110 is controlled to acquire electric energy from the power grid 130.

Optionally, the control unit 160 can send a charge command to the PCS, the PCS sends the charge command to the BMS, and the BMS controls the battery to be charged; meanwhile, the control unit 160 further can send the charge command to the charging and discharging device 120, so that the electricity consumption device 110 can acquire electric energy from the power grid 130 through the charging and discharging device 120.

S444: whether the amount of electric charge of the electricity consumption device 110 is greater than or equal to a fourth threshold is determined. If the amount of electric charge of the electricity consumption device 110 is greater than or equal to the fourth threshold, S445 is executed. If the amount of electric charge of the electricity consumption device 110 is less than the fourth threshold, S443 is executed.

Optionally, the fourth threshold can be 100% of a fully charged amount of electric charge of the electricity consumption device 110. Its specific numerical value can be set according to an actual demand, which is not limited specifically in the embodiment of the present application. Optionally, the fourth threshold can correspond to the SOC.

Optionally, when the amount of electric charge of the electricity consumption device 110 reaches the fully charged amount of electric charge, the control unit 160 sends the charge stopping command, so that the electricity consumption device 110 is stopped acquiring electric energy from the power grid 130 through the charging and discharging device 120.

S445: the electricity consumption device 110 is stopped acquiring electric energy from the power grid 130.

Optionally, the controller unit 160 can control the electricity consumption device 110 to stop acquiring electric energy from the power grid 130 when the power grid is in the electricity consumption peak period at the current moment.

S450: the electricity consumption device 110 is controlled to transmit electric energy to the power grid 130.

Optionally, Step 450 can refer to Step 310 and Step 360, which is not described repeatedly herein.

By determining the electricity consumption peak period and the electricity consumption trough period, the electricity consumption device 110 is controlled to transmit electric energy to the power grid 130 in the electricity consumption peak period and to acquire electric energy from the power grid 130, so that peak load shaving of the electricity consumption load of the power grid 130 can be achieved, thereby facilitating reasonable allocation of electric power and maintaining the stability of the power grid 130.At the same time, whether the power grid at the current moment is in the electricity consumption peak period or the electricity consumption trough period can be automatically detected and determined, so that electric energy transmission between the electricity consumption device 110 and the power grid 130 can be automatically controlled, and thus, automation of the method can be further improved.

The embodiment of the method of the present application is described in detail above in combination with FIGs. 1-5. The embodiment of the charging and discharging system of the present application will be described in detail below. It should be understood that the embodiment of the method corresponds to the embodiment of the system, and similar descriptions can refer to the embodiment of the method.

FIG. 6 is a schematic diagram of a charging and discharging system in an embodiment of the present application. As shown in FIG. 6, the embodiment of the present application provides a charging and discharging system 100, including an electricity consumption device 160 and a charging and discharging device 120.The control unit 160 is configured to acquire first data, the first data being configured to indicate electricity consumption information of a power grid 130; and to control the electricity consumption device 110 to acquire electric energy from the power grid 130 or to transmit the electric energy to the power grid 130 through the charging and discharging device 120 according to the first data in a case where the electricity consumption device 110 is connected to the charging and discharging device 120.

Optionally, the control unit 160 can send the discharge command or the charge command to the PCS of the electricity consumption device 110, the PCS sends the discharge command or the charge command to the BMS, and the BMS controls the battery to be charged or discharge specifically, so that electric energy transmission between the electricity consumption device 110 and the power grid 130 is controlled by the control unit 160.

Optionally, the BMS and the PCS can communicate with each other, i.e., information interaction, and can communicate with each other through either a wired interface or wireless signaling, which is not limited specifically in the embodiment of the present application.

Optionally, the control unit 160 can send the discharge command or the charge command to the charging and discharging device 120, and the charging and discharging device 120 can achieve transmission of electric energy of the electricity consumption device 110 to the power grid 130 or acquisition of electric energy by the electricity consumption device 110 from the power grid 130 according to the discharge command or the charge command.

Optionally, the control unit 160 can further control electric energy transmission between the electricity consumption device 110 and the power grid 130 in other ways except for sending the discharge command or the charge command, which is not limited specifically in the embodiment of the present application.

Optionally, in an embodiment of the present application, the control unit 160 is configured to acquire the initial amount of electric charge of the electricity consumption device 110.

Optionally, the BMS of the electricity consumption device 110 is configured to detect the initial amount of electric charge of the electricity consumption device 110 and send information including the initial amount of electric charge to the control unit 160, so that the control unit 160 can acquire the initial amount of electric charge of the electricity consumption device 110.

Optionally, in an embodiment of the present application, the control unit 160 is configured to control the electricity consumption device 110 to transmit the electric energy to the power grid 130 in a case where the amount of electric charge of the electricity consumption device 110 is greater than the first threshold.

Optionally, the BMS detects the amount of electric charge of the electricity consumption device 110. The control unit 160 determines a relationship between the amount of electric charge of the electricity consumption device 110 and the first threshold. When the current amount of electric charge of the electricity consumption device 110 is greater than the first threshold, the control unit 160 controls the electricity consumption device 110 to transmit electric energy to the power grid 130 through the PCS and the BMS.

Optionally, in an embodiment of the present application, the control unit 160 is configured to control the electricity consumption device 110 to stop transmitting electric energy to the power grid 130 in a case where the amount of electric charge of the electricity consumption device 110 is less than or equal to the second threshold, wherein the second threshold is less than the first threshold.

Optionally, in an embodiment of the present application, the charging and discharging system further includes the server 150.The server 150 is configured to receive a prediction request sent by the control unit 160 and to calculate the predicted electricity consumption information according to the prediction request; and the control unit 160 is configured to receive the predicted electricity consumption information.

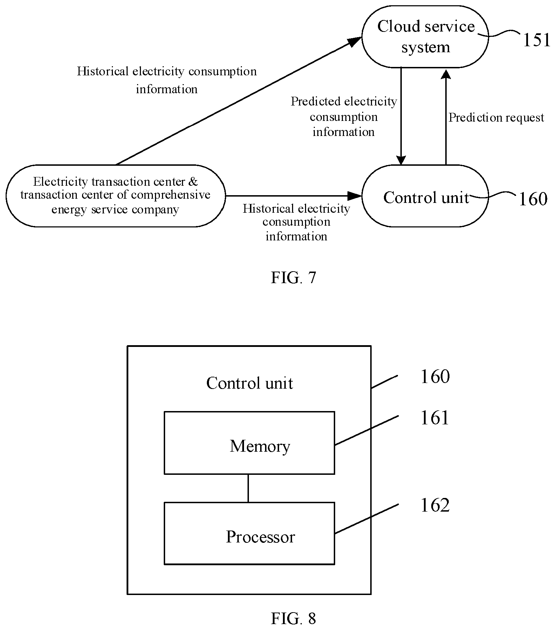

FIG. 7 is a schematic diagram of information interaction between a control unit and a server in an embodiment of the present application. As shown in FIG. 7, the cloud service system 151 receives a prediction request of the control unit 160 and calculates the predicted electricity consumption information according to the prediction request. The cloud service system is further configured to acquire the historical electricity consumption information from the electricity transaction center or the transaction center of the comprehensive energy service company and to calculate the predicted electricity consumption information according to the historical electricity consumption information.

Optionally, in an embodiment of the present application, the control unit 160 is configured to determine the electricity consumption peak period of the power grid 130 or the electricity consumption trough period of the power grid 130 according to the first data.

Optionally, in an embodiment of the present application, the electricity consumption information includes the electricity consumption peak period of the power grid 130 and/or the electricity consumption trough period of the power grid 130, and the control unit 160 is configured to control the electricity consumption device 110 to transmit the electric energy to the power grid 130 in the electricity consumption peak period of the power grid 130, and/or to control the electricity consumption device 110 to acquire the electric energy from the power grid 130 in the electricity consumption trough period of the power grid 130.

The embodiment of the present application provides a readable storage medium, configured to store a computer program, wherein the computer program is configured to execute the method for controlling electric power according to any one of the aforementioned embodiments.

The embodiment of the present application provides a computer program which includes an instruction. A computer can execute the method for controlling electric power according to any one of the aforementioned embodiments when the computer program is executed.

FIG. 8 is a schematic diagram of the control unit in an embodiment of the present application. As shown in FIG. 8, the embodiment of the present application provides a control unit 160, including a processor 162 and a memory 161. The memory 161 is configured to store the computer program, and the processor 162 is configured to call the computer program to execute the method for controlling electric power according to any one of the aforementioned embodiments.

The processor 162 in the embodiment of the present application can be an integrated circuit chip and has a signal processing capability. In an implementation process, each step of the method embodiments may be completed by an integrated logical circuit of hardware in the processor or an instruction in a software form. The processor may be a universal processor, a Digital Signal Processor (DSP), an Application Specific Integrated Circuit (ASIC), a Field Programmable Gate Array (FPGA) or another programmable logical device, discrete gate or transistor logical device and discrete hardware component. Each method and step disclosed in the embodiments of the present application can be implemented or executed. The universal processor can be a microprocessor or the processor may also be any conventional processor and so forth. The steps of the method disclosed in combination with the embodiments of the application may be directly embodied to be executed and completed by a hardware decoding processor or executed and completed by a combination of hardware and software modules in the decoding processor. The software module may be located in a mature storage medium in this field such as a Random Access Memory (RAM), a flash memory, a Read-Only Memory (ROM), a Programmable ROM (PROM) or Electrically Erasable PROM (EEPROM) and a register. The storage medium is located in a memory, and the processor reads information in the memory, and completes the steps of the method in combination with hardware.

The memory 161 in the embodiment of the present application can be a volatile memory or a nonvolatile memory or can include both the volatile and nonvolatile memories. The nonvolatile memory may be a ROM, a PROM, an Erasable PROM (EPROM), an EEPROM or a flash memory. The volatile memory may be a RAM, and is used as an external high-speed cache. It is exemplarily but unlimitedly described that RAMs in various forms may be adopted, such as a Static RAM (SRAM), a Dynamic RAM (DRAM), a Synchronous DRAM (SDRAM), a Double Data Rate SDRAM (DDRSDRAM), an Enhanced SDRAM (ESDRAM), a Synchlink DRAM (SLDRAM) and a Direct Rambus RAM (DR RAM). It should be noted that the memory of a system and method described in the disclosure is intended to include, but not limited to, memories of these and any other proper types.

It should be understood that specific examples herein are only used for helping those skilled in the art better understand the embodiments of the present application rather than limiting the embodiments of the present application.

It should be further understood that, in each embodiment of the present application, a magnitude of a sequence number of each process does not mean an execution sequence and the execution sequence of each process should be determined by its function and an internal logic and should not form any limit to an implementation process of the embodiments of the present application.

It should be further understood that various implementation modes described in the description can be implemented either independently or in a combined manner, which is not limited in the embodiments of the present application.

Although the present application has been described with reference to preferred embodiments, various improvements can be made thereto and equivalents can be used for replacement of members therein without departing from the scope of the present application. In particular, provided no structural conflict exists, the technical features mentioned in the embodiments can be combined in any way. The present application is not restricted to particular embodiments disclosed herein, but to comprise all technical solutions falling in the scope of the claims.

## Claims

1. A method for controlling electric power, the method comprising:
acquiring first data, the first data being configured to indicate electricity consumption information of a power grid; and
controlling an electricity consumption device to acquire electric energy from the power grid or to transmit the electric energy to the power grid through a charging and discharging device according to the first data in a case where the electricity consumption device is connected to the charging and discharging device.

2. The method according to claim 1, wherein when the electricity consumption device is connected to the charging and discharging device, the method further comprises:
acquiring an initial amount of electric charge of the electricity consumption device.

3. The method according to claim 2, wherein when the step of controlling the electricity consumption device to transmit the electric energy to the power grid comprises:
controlling the electricity consumption device to transmit the electric energy to the power grid in a case where the amount of electric charge of the electricity consumption device is greater than a first threshold.

4. The method according to claim 3, further comprising:
controlling the electricity consumption device to stop transmitting the electric energy to the power grid in a case where the amount of electric charge of the electricity consumption device is less than or equal to a second threshold, wherein the second threshold is less than the first threshold.

5. The method according to claim 3 or 4, wherein the first threshold is 50% of a fully charged amount of electric charge of the electricity consumption device.

6. The method according to any one of claims 1-5, wherein the first data comprises historical electricity consumption information of the power grid.

7. The method according to any one of claims 1-5, wherein the first data comprises predicted electricity consumption information of the power grid.

8. The method according to claim 7, wherein before acquiring the first data, the method further comprises:
sending a prediction request to a server; and
the acquiring the first data comprises:
receiving the predicted electricity consumption information sent by the server.

9. The method according to any one of claims 1-8, wherein before the step of controlling the electricity consumption device to acquire electric energy from the power grid or to transmit the electric energy to the power grid through the charging and discharging device according to the first data, the method further comprises:
determining an electricity consumption peak period of the power grid or an electricity consumption trough period of the power grid according to the first data.

10. The method according to any one of claims 1-9, wherein the electricity consumption information comprises the electricity consumption peak period of the power grid and/or the electricity consumption trough period of the power grid, and the step of controlling the electricity consumption device to acquire electric energy from the power grid or to transmit the electric energy to the power grid through the charging and discharging device according to the first data comprises:
in the electricity consumption peak period, controlling the electricity consumption device to transmit the electric energy to the power grid, and/or
in the electricity consumption trough period, controlling the electricity consumption device to acquire the electric energy from the power grid.

11. A charging and discharging system, comprising a control unit and a charging and discharging device, wherein the control unit is configured to acquire first data, the first data being configured to indicate electricity consumption information of a power grid; and to control the electricity consumption device to acquire electric energy from the power grid or to transmit the electric energy to the power grid through the charging and discharging device according to the first data in a case where an electricity consumption device is connected to the charging and discharging device.

12. The charging and discharging system according to claim 11, wherein the control unitis configured to:
acquire an initial amount of electric charge of the electricity consumption device.

13. The charging and discharging system according to claim 12, wherein the control unitis configured to:
control the electricity consumption device to transmit the electric energy to the power grid in a case where the amount of electric charge of the electricity consumption device is greater than a first threshold.

14. The charging and discharging system according to claim 13, wherein the control unit is configured to:
control the electricity consumption device to stop transmitting the electric energy to the power grid in a case where the amount of electric charge of the electricity consumption device is less than or equal to a second threshold, wherein the second threshold is less than the first threshold.

15. The charging and discharging system according to claim 13 or 14, wherein the first threshold is 50% of a fully charged amount of electric charge of the electricity consumption device.

16. The charging and discharging system according to any one of claims 11-15, wherein the first data comprises historical electricity consumption information of the power grid.

17. The charging and discharging system according to any one of claims 11-15, wherein the first data comprises predicted electricity consumption information of the power grid.

18. The charging and discharging system according to claim 17, the charging and discharging system further comprising a server,
wherein the server is configured to receive a prediction request sent by the control unit and to calculate the predicted electricity consumption information according to the prediction request; and
the control unit is configured to receive the predicted electricity consumption information.

19. The charging and discharging system according to any one of claims 11-18, wherein the control unit is configured to:
determine an electricity consumption peak period of the power grid or an electricity consumption trough period according to the first data.

20. The charging and discharging system according to any one of claims 11-19, wherein the electricity consumption information comprises the electricity consumption peak period of the power grid and/or the electricity consumption trough period of the power grid, and control unit is configured to:
in the electricity consumption peak period, control the electricity consumption device to transmit the electric energy to the power grid; or
in the electricity consumption trough period, control the electricity consumption device to acquire the electric energy from the power grid.

21. A readable storage medium, configured to store a computer program, wherein the computer program is configured to execute the method for controlling electric power according to any one of claims 1-10.

22. A control unit, comprising a processor and a memory, wherein the memory is configured to store a computer program, and the processor is configured to call the computer program to execute the method for controlling electric power according to any one of claims 1-10.
